# EUROPEAN PATENT APPLICATION

(11) **EP 4 851 114 A1**
(43) Date of publication of application: **09.12.2026**
(21) Application number: 24943666.8
(22) Date of filing: 31.12.2024
(51) Int. Cl.: C01G 53/504, C01G 53/42, C01G 53/506, H01M 4/525

(54) **POSITIVE ELECTRODE MATERIAL AND PREPARATION METHOD THEREFOR, LITHIUM-ION BATTERY, AND ELECTRIC DEVICE**

(71) Applicant: Beijing Easpring Material Technology Co., Ltd., Beijing 100160 (CN)
(72) Inventor: ZHAO, Xiangyu, Beijing 100160 (CN); FU, Haikuan, Beijing 100160 (CN); LI, Jingjing, Beijing 100160 (CN); SONG, Shunlin, Beijing 100160 (CN); LIU, Yafei, Beijing 100160 (CN); CHEN, Yanbin, Beijing 100160 (CN)
(74) Representative: Lavoix
(86) International application number: PCT/CN2024/144432
(87) International publication number: WO 2026/143461

(57) **Abstract**

The present disclosure relates to the field of battery technologies, and more particularly, to a cathode material and a method for preparing the same, a lithium-ion battery, and an electrical device. The cathode material includes:

Li₁₊ₐ₁(Niₓ₁Co_{y1}Mn_{z1}M¹ₘ₁)M²ₘ₂O₂

M¹ includes at least one of Ta, Cr, Mo, W, La, Al, Y, Ti, Zr, V, Nb, Ce, Er, Mg, Sr, Ba, and B. M² includes at least one of W, Mo, Zr, Al, V, Ti, B, Co, and Nb. A fitting line of a pressure Pₓ versus microstrain change ΔN_{Px} of the cathode material satisfies: ΔN_{Px}=kPₓ, where 0<k<0.0012. k is a slope, Pₓ is a pressure applied to the cathode material in MPa before testing a microstrain. The microstrain change ΔN_{Px} is a difference between a microstrain of the cathode material after applying the pressure Pₓ and a microstrain of the cathode material without applying the pressure. Therefore, the cathode material has better processability and higher compressive strength, resulting in fewer cracks formed on a particle surface after calendering of an electrode sheet and significantly improving cycling performance.

## Description

### FIELD

The present disclosure relates to the field of battery technologies, and more particularly, to a cathode material and a method for preparing the same, a lithium-ion battery, and an electrical device.

### BACKGROUND

A cathode material has advantages such as high energy density, long cycle life, and low gas production, and is widely used in a lithium-ion battery. Failure analysis of the cathode material reveals that, unlike agglomerated material particles which undergo pulverization and fragmentation after long-term charge-discharge cycles, the cathode material still maintains an intact structure after multiple charge-discharge cycles. However, cracks may form on surfaces of some particles. These cracks may expose an uncoated inner surface to electrolyte, aggravating corrosion of the cathode material and electrolyte consumption, leading to an irreversible capacity loss and deterioration of cycling performance.

The crack formation in the cathode materials is generally attributed to their physicochemical properties of the cathode material during battery operation, including volume contraction and expansion in a charge-discharge process, severe polarization caused by a long lithium-ion diffusion path, and electrolyte decomposition and corrosion due to an excessively high operating voltage. Studies have shown that cracks may still be observed in a cathode sheet made from the cathode material without undergoing charge-discharge cycles, indicating that the charge-discharge process is not a main cause of cracking. The cracks primarily originate from the calendering process of the electrode sheet, where crystal plane slip, stacking faults, and tearing occur of the material under pressure, leading to crack formation.

The conventional development approaches for the cathode material focus aspects such as on bulk doping, surface coating, and morphology control. These approaches can improve cycling performance of the cathode material by enhancing lithium-ion migration kinetics and reducing a side reaction between the cathode material and the electrolyte. However, there are no effective solutions to the issue of crack formation in the cathode material after calendering.

### SUMMARY

The present disclosure aims to solve at least one of the technical problems in the related art to some extent. To this end, the present disclosure provides a cathode material with a low stress or high compressive strength, a method for preparing the same, a lithium-ion battery, and an electrical device.

In a first aspect, the present disclosure provides a cathode material. The cathode material includes:

Li₁₊ₐ₁(Niₓ₁Co_{y1}Mn_{z1}M¹ₘ₁)M²ₘ₂O₂,

where
-0.1≤a1≤0.1, 0.5≤x1<1, 0<y1≤0.4, 0<z1≤0.6, 0≤m1≤0.1, 0≤m2≤0.02; M¹ includes at least one of Ta, Cr, Mo, W, La, Al, Y, Ti, Zr, V, Nb, Ce, Er, Mg, Sr, Ba, and B; and M² includes at least one of W, Mo, Zr, Al, V, Ti, B, Co, and Nb. A fitting line of a pressure Pₓ versus microstrain change ΔN_{Px} of the cathode material satisfies: ΔN_{Px}=kPₓ, and 0<k<0.0012; k is a slope; Pₓ is a pressure applied to the cathode material prior to microstrain testing, in the unit of MPa. The microstrain change ΔN_{Px} is a difference between a microstrain of the cathode material under an applied pressure Pₓ and a microstrain of the cathode material without an applied pressure.

The present disclosure uses an X-ray diffractometer to perform structural analysis on a single-crystal multi-element cathode material. The microstrain of the material is obtained through a Rietveld calculation, and a microstrain under different pressures is tested. The material is then characterized to further evaluate structural stability of the cathode material. When the material has the above composition and the fitting line of the pressure Pₓ versus microstrain change ΔN_{Px} of the cathode material satisfies the above conditions, the cathode material exhibits better structural stability and processability. Fewer cracks can be formed on the particle surface after the electrode calendering, and cycling performance can be significantly improved.

In some embodiments, 0<k<0.001. When k-value is within this range, it indicates that the degree of microstrain change in the cathode material is low, and the material structure is more stable. Therefore, this ensures that the material maintains structural stability in a high-voltage charge-discharge test, significantly improving the cycling performance.

In some embodiments, a microstrain N_{P0} of the cathode material without an applied pressure is less than 0.1%. In other embodiments, N_{P0} is less than 0.08%. Therefore, the cathode material has a relatively low microstrain, better structural stability, and high compressive strength.

In some embodiments, a microstrain N_{P500} of the cathode material under an applied pressure of 500 MPa is less than 0.18%. In other embodiments, N_{P500} is less than 0.16%. Therefore, the cathode material has relatively low microstrain, better structural stability, and high compressive strength.

In some embodiments, a D₅₀ particle size D_{50(P0)} of the cathode material without an applied pressure and a D₅₀ particle size D_{50(P500)} of the cathode material under an applied pressure of 500 MPa satisfy: (D_{50(P0)}-D_{50(P500)})/D_{50(P0)}<30%. In other embodiments, (D_{50(P0)}-D_{50(P500)})/D_{50(P0)}<20%. Therefore, compressive strength and the cycling performance of the cathode material can be further improved.

In some embodiments, a D₅₀ particle size D_{50(P0)} of the cathode material without an applied pressure ranges from 2 µm to 6 µm. In other embodiments, D_{50(P0)} ranges from 2.5 µm to 4.5 µm. Therefore, it is conducive to improving the energy density of the lithium-ion battery.

In some embodiments, a particle size distribution span, SPAN_{P0}, of the cathode material without an applied pressure satisfies: 0.8<SPAN_{P0}<1.4. In other embodiments, 0.9<SPAN_{P0}<1.3. SPAN_{P0}=(D_{90(P0)}-D_{10(P0)})/D_{50(P0)}. D_{10(P0)} is a D₁₀ particle size of the cathode material without the applied pressure. D_{50(P0)} is a D₅₀ particle size of the cathode material without the applied pressure. D_{90(P0)} is a D₉₀ particle size of the cathode material without the applied pressure. Therefore, it is conducive to increasing the compaction density and volumetric energy density of the cathode material.

In some embodiments, a specific surface area of the cathode material without an applied pressure is denoted as S_{P0}, a specific surface area of the cathode material under an applied pressure of 500 MPa is denoted as S_{P500}, and S_{P0} and S_{P500} satisfying: (S_{P500}-S_{P0})/S_{P0}<75%. In other embodiments, (S_{P500}-S_{P0})/S_{P0}<50%. Therefore, the compressive strength and the cycling performance of the cathode material can be further improved.

In some embodiments, a specific surface area of the cathode material without an applied pressure is denoted as S_{P0}, S_{P0} ranging from 0.3 m²/g to 1.2 m²/g. In other embodiments, S_{P0} ranges from 0.4 m²/g to 1.0 m²/g. Therefore, it is conducive to improving the cycling performance of the lithium-ion battery.

In a second aspect, the present disclosure provides a method for preparing a cathode material. The method includes: mixing a precursor and a lithium source, and optionally an M¹ source to obtain a raw material mixture; performing a first sintering on the raw material mixture, the first sintering including heating the raw material mixture to a first temperature T1 and holding the temperature for a first period of time, cooling the mixture from T1 to 600°C at an average cooling rate of ≤2°C/min, and naturally cooling the mixture to a room temperature to obtain a primary sintered material; and mixing the primary sintered material with a first M² source, and performing a second sintering on the obtained mixture to obtain a secondary sintered material.

The present disclosure prepares the cathode material with the low stress and the high compressive strength by controlling the temperature gradient of high-temperature solid-state sintering. This cathode material has better processability, resulting in fewer cracks formed on the particle surface after electrode calendaring and significantly improving the cycling performance. A core of this preparation method lies in controlling the cooling rate. By performing medium-to-high temperature holding and annealing at an end of high-temperature sintering, the internal stress in the cathode material is eliminated and the compressive strength of the cathode material is enhanced.

In some embodiments, the first sintering includes: heating the raw material mixture to the first temperature T1 and holding the temperature for the first period of time, cooling the mixture from T1 to T1-80°C at an average cooling rate of ≤1°C/min, cooling the mixture from T1-80°C to 600°C at the average cooling rate of ≤2°C/min, and naturally cooling the mixture to the room temperature.

In some embodiments, T1-80°C>800°C. The mixture is cooled from T1-80°C to 800°C at an average cooling rate of ≤1.5°C/min, continuously cooled from T1-80°C to 600°C at the average cooling rate of ≤2°C/min, and naturally cooled to the room temperature.

In some embodiments, 600°C≤T1-80°C≤800°C. The mixture is cooled from T1-80°C to 600°C at the average cooling rate of ≤2°C/min, and naturally cooled to the room temperature.

When the above sintering regime is satisfied, it is conducive to obtaining a cathode material with a lower stress and a higher compressive strength, thereby improving the cycling performance of the lithium-ion battery.

In some embodiments, the method for preparing the cathode material further includes: mixing the secondary sintered material with a second M² source, and performing a third sintering on the obtained mixture to obtain a tertiary sintered material. Therefore, energy density and the cycling performance of the cathode material can be further improved.

In some embodiments, the lithium source includes one of lithium carbonate, lithium hydroxide, anhydrous lithium hydroxide, and lithium oxide. Therefore, the materials are widely available and have lower costs.

In some embodiments, the M¹ source includes at least one of oxides, carbonates, phosphates, fluorides, chlorides, hydroxides, and silicides, containing an M¹ element. Therefore, the materials are widely available and have lower costs.

In some embodiments, each of the first M² source and a second M² source independently includes at least one of oxides, carbonates, phosphates, fluorides, chlorides, hydroxides, and silicides, containing an M² element. Therefore, the materials are widely available and have lower costs.

In some embodiments, a temperature of the second sintering ranges from 400°C to 800°C, with a holding duration ranging from 4 hours to 10 hours.

In some embodiments, a temperature of the third sintering ranges from 300°C to 600°C, with a holding duration ranging from 4 hours to 10 hours.

In a third aspect, the present disclosure provides a lithium-ion battery. The lithium-ion battery includes the cathode material according to the first aspect of the present disclosure or the cathode material prepared by the method according to the second aspect of the present disclosure. Therefore, the lithium-ion battery has good cycling performance.

In a fourth aspect, the present disclosure provides an electrical device. The electrical device includes the lithium-ion battery according to the third aspect of the present disclosure. Therefore, the electrical device has a long service life.

### BRIEF DESCRIPTION OF THE DRAWINGS

FIG. 1 is a schematic diagram of the gradient cooling sintering curve according to the present disclosure.
FIG. 2 is an SEM image of a cathode material after pressure fracturing treatment under a pressure of 500 MPa according to the present disclosure.

### DETAILED DESCRIPTION

Embodiments of the present disclosure will be described in detail below with reference to examples thereof as illustrated in the accompanying drawings. The embodiments described below with reference to the drawings are illustrative, and are intended to explain, rather than limiting, the present disclosure.

In a first aspect, the present disclosure provides a cathode material. The cathode material includes:

Li₁₊ₐ₁(Niₓ₁Co_{y1}Mn_{z1}M¹ₘ₁)M²ₘ₂O₂,

where -0.1≤a1≤0.1, 0.5≤x1<1, 0<y1≤0.4, 0<z1≤0.6, 0≤m1≤0.1, 0≤m2≤0.02, M¹ includes at least one of Ta, Cr, Mo, W, La, Al, Y, Ti, Zr, V, Nb, Ce, Er, Mg, Sr, Ba, and B, and M² includes at least one of W, Mo, Zr, Al, V, Ti, B, Co, and Nb. A fitting line of a pressure Pₓ versus microstrain change ΔN_{Px} of the cathode material satisfies: ΔN_{Px}=kPₓ, where 0<k<0.0012. k is a slope, Pₓ is a pressure applied to the cathode material in MPa prior to microstrain testing. The microstrain change ΔN_{Px} is a difference between a microstrain of the cathode material under an applied pressure Pₓ and a microstrain of the cathode material without an applied pressure.

The present disclosure uses an X-ray diffractometer to perform structural analysis on the cathode material. The microstrain of the material is obtained through a Rietveld calculation, and a microstrain under different pressures is tested. The material is then characterized to further evaluate structural stability of the cathode material. The above cathode material according to the present disclosure satisfies: 0<k<0.0012, the cathode material has a relatively low microstrain change, better structural stability and processability. Fewer cracks can be formed on the particle surface after the electrode calendering, and cycling performance can be significantly improved.

In some embodiments, 0<k<0.001. For example, k may be 0.0001, 0.0002, 0.0003, 0.0004, 0.0005, 0.0006, 0.0007, 0.0008, 0.0009, or 0.001. The k-value reflects a degree of microstrain change of the material under different pressure conditions. A lower k-value indicates that as a pressure increases, the degree of microstrain change of the material is lower, indicating superior structural stability of the material. The material with the lower k-value can maintain structural stability in a high-voltage charge-discharge test, significantly improving the cycling performance.

In the present disclosure, a method for fitting the pressure Pₓ and the microstrain change △N_{Px} of the cathode material into a straight line include the following steps.

Step 1: taking n portions of the cathode material, defining the n portions of the cathode material as a 1st portion, a 2nd portion, ..., and an nth portion of the cathode material, where n is an integer greater than or equal to 5; step 2: adding the 1st portion, the 2nd portion, ..., and the nth portion of the cathode material into a mold, respectively, and applying a 1st pressure, a 2nd pressure, ..., and an nth pressure that increase sequentially from small to large in a one-to-one correspondenc. Then, dissociating the obtained pressed sheet to obtain a 1st sample, a 2nd sample, ..., and an nth sample, respectively. The cathode material without an applied pressure serves as an initial sample; step 3: after calibrating a goniometer position and an instrument width of an X-ray powder diffractometer, performing an X-ray diffraction test on the initial sample, the 1st sample, the 2nd sample, ..., and the nth sample using the X-ray powder diffractometer to obtain X-ray diffraction data; step 4: calculating, based on the X-ray diffraction data, a microstrain of N_{P0}, a microstrain of N_{P1}, a microstrain of N_{P2}, ..., a microstrain of N_{Pn} corresponding to the initial sample, the 1st sample, the 2nd sample, ..., and the nth sample. Then, calculating the microstrain change as △N_{P1}=N_{P1}-N_{P0}, △N_{P2}=N_{P2}-N_{P1}, ..., and △N_{Pn}=N_{Pn}-N_{Pn-1}, respectively; step 5: plotting scatter diagrams of the microstrain changes and the pressures, fitting these scatter points into a straight line, and determining the structural stability of the cathode material based on a slope of the fitted straight line.

It should be noted that the pressure applied to the cathode material is required to be within a reasonable range. In some embodiments, a pressure P₁ applied to the cathode material ranges from 50 MPa to 150 MPa (e.g., 50 MPa, 80 MPa, 100 MPa, 120 MPa, or 150 MPa). In other embodiments, the pressure P₁ applied to the cathode material ranges from 80 MPa to 120 MPa.

In some embodiments, a pressure Pₙ applied to the cathode material ranges from 150 MPa to 900 MPa (e.g., 150 MPa, 200 MPa, 300 MPa, 400 MPa, 500 MPa, 600 MPa, 700 MPa, 800 MPa, or 900 MPa). In other embodiments, a pressure Pₙ applied to the cathode material ranges from 160 MPa to 600 MPa.

In some embodiments, a difference between a pressure Pᵢ and a pressure Pᵢ₋₁ of the cathode material ranges from 20 MPa to 200 MPa (e.g., 20 MPa, 40 MPa, 60 MPa, 80 MPa, 100 MPa, 120 MPa, 140 MPa, 160 MPa, 180 MPa, or 200 MPa). In other embodiments, the difference ranges from 50 MPa to 100 MPa, where i is an integer ranging from 2 to n, where n is the integer greater than or equal to 5 (e.g., 5, 6, 7, 8, 9, 10, 11, 12, 13, 14, or 15, and so on).

As an example, when n=7, the method for fitting the pressure Pₓ and the microstrain change △N_{Px} of the cathode material into a straight line includes: step 1: performing surface moisture treatment on the cathode material. Typically, a blast oven or a vacuum oven is used for drying at 100°C for 2 hours; step 2: performing sample weighing, and weighing the treated sample according to the following standards: for a sample with D₅₀≤3 µm, a sampling amount ranges from 0.5 g to 1.5 g; for a sample with 3 µm≤D₅₀≤7 µm, a sampling amount ranges from 1.5 g to 3 g; for a sample with D₅₀≥7 µm, a sampling amount ranges from 3 g to 5 g; and transferring the weighed samples into a compaction mold and gently shaking the mold to falt the sample surface; step 3: placing a mold with the loaded sample into the device and slowly applying a pressure to a specified value (specifically, a pressure corresponding to 50 MPa, 100 MPa, 200 MPa, 300 MPa, 400 MPa, 500 MPa, and 600 MPa). Where the pressure applied by the device divided by a mold area equals pressure intensity. After standing for 30 seconds, removing the mold and demolding the sample. One sample preparation can only be tested at a single pressure point; step 4: putting the demolded cathode pressed sheet into a mortar, gently disaggregating the pressed sheet, and performing particle sieving using a standard sieve to completely pulverize the pressed sheet into powder without a flaky particle, packing, labeling, and storing the treated sample; step 5: calibrating an instrument parameter of the X-ray powder diffractometer, using standard Si powder to calibrate the goniometer position of the device, and using a standard LaB6 to calibrate the instrument width; calibrating the goniometer position and the instrument width, respectively, under the determined test conditions, mounting standard substances (i.e., Si powder, LaB6) on a sample stage, collecting a diffraction pattern, calibrating the instrument, and saving data; step 6: mounting materials subjected to different pressures on the sample stage, respectively, performing an X-ray powder diffraction test under the determined conditions, and saving the data for subsequent analysis. The samples mounted on the sample stage are required to be flat, and a height of the sample needs to be consistent in each test; step 7: importing test data into Rietveld refinement software for data processing: (1) first, performing peak position processing: selecting a maximum peak for processing and ensuring the software can identify all peak positions; (2) performing phase identification: using PDF5+ database (International Centre for Diffraction Data) to determine a phase, and the test data is required to be highly consistent with card information; (3) adding instrument width calibration data (an external standard calibrated width), selecting all crystal planes, and calculating the microstress data of the material using an Halder-Wagner method; step 8: analyzing the microstrain data of the material calculated by the Halder-Wagner method; and step 9: plotting scatter diagrams of the microstrain data and pressure for analysis, and calculating the slope k.

In some embodiments, a microstrain N_{P0} of the cathode material without an applied pressure is less than 0.1%. For example, N_{P0} may be 0.01%, 0.02%, 0.03%, 0.04%, 0.05%, 0.06%, 0.07%, 0.08%, or 0.09%. In other embodiments, N_{P0} is less than 0.08%. A microstrain within the above range indicates that the cathode material has good structural stability and high compressive strength.

In some embodiments, a microstrain N_{P500} of the cathode material under an applied pressure of 500 MPa is less than 0.18%. For example, N_{P500} may be 0.01%, 0.03%, 0.05%, 0.08%, 0.1%, 0.13%, 0.15%, or 0.17%. In other embodiments, N_{P500} is less than 0.16%. The cathode material under the applied pressure has the low microstrain, and high compressive strength.

In some embodiments, a D₅₀ particle size D_{50(P0)} of the cathode material without an applied pressure and a D₅₀ particle size D_{50(P500)} of the cathode material under an applied pressure of 500 MPa satisfy: (D_{50(P0)}-D_{50(P500)})/D_{50(P0)}<30%, e.g, 1%, 5%, 8%, 10%, 13%, 15%, 18%, 20%, 23%, 25%, or 28%. In other embodiments, (D_{50(P0)}-D_{50(P500)})/D_{50(P0)}<20%. Therefore, the compressive strength and the cycling performance of the cathode material can be further improved.

In some embodiments, a D₅₀ particle size D_{50(P0)} of the cathode material without an applied pressure ranges from 2 µm to 6 µm. For example, D_{50(P0)} may be 2 µm, 2.5 µm, 3 µm, 3.5 µm, 4 µm, 4.5 µm, 5 µm, 5.5 µm, or 6 µm. In other embodiments, the D₅₀ particle size D_{50(P0)} of the cathode material without an applied pressure ranges from 2.5 µm to 4.5 µm. Therefore, energy density of the lithium-ion battery can be improved.

In some embodiments, a particle size distribution span, SPAN_{P0}, of the cathode material without an applied pressure satisfies: 0.8<SPAN_{P0}<1.4. For example, SPAN_{P0} may be 0.9, 1, 1.1, 1.2, or 1.3. In other embodiments, 0.9<SPAN_{P0}<1.3. SPAN_{P0}=(D_{90(P0)}-D_{10(P0)})/D_{50(P0)}. D_{10(P0)} is a D₁₀ particle size of the cathode material without the applied pressure. D_{50(P0)} is a D₅₀ particle size of the cathode material without the applied pressure. D_{90(P0)} is a D₉₀ particle size of the cathode material without the applied pressure. A particle size distribution span within the above range is beneficial for improving compaction density and volumetric energy density of the cathode material.

In particle size distribution, D₅₀ is also known as a median particle size, which means that 50% of the particles by volume have a size less than or equal to this value. D₉₀ means 90% of the particles by volume have a size less than or equal to this value. D₁₀ means 10% of the particles by volume have a size less than or equal to this value. D₁₀, D₅₀, and D₉₀ may be measured using a Malvern particle size analyzer: dispersing the cathode material in a dispersant (ethanol, acetone, or other surfactants), sonicating for 30 minutes, and then adding the sample to the Malvern particle size analyzer to start the test.

In some embodiments, a specific surface area of the cathode material without an applied pressure is denoted as S_{P0}, a specific surface area of the cathode material under an applied pressure of 500 MPa is denoted as S_{P500}, S_{P0} and S_{P500} satisfying: (S_{P500}-S_{P0})/S_{P0}<75%, e.g., 10%, 20%, 30%, 40%, 50%, 60%, or 70%. In other embodiments, (S_{P500}-S_{P0})/S_{P0}<50%.

In some embodiments, a specific surface area of the cathode material without an applied pressure is denoted as S_{P0}, S_{P0} ranging from 0.3 m²/g to 1.2 m²/g. For example, S_{P0} may be 0.3 m²/g, 0.4 m²/g, 0.5 m²/g, 0.6 m²/g, 0.7 m²/g, 0.8 m²/g, 0.9 m²/g, 1 m²/g, 1.1 m²/g, or 1.2 m²/g. In other embodiments, S_{P0} ranges from 0.4 m²/g to 1.0 m²/g. Therefore, the cycling performance of the lithium-ion battery can be improved.

In the present disclosure, the specific surface area of the cathode material refers to a surface area per unit mass of the cathode material. S_{P0} and S_{P500} may be measured by using a specific surface area analyzer.

In a second aspect, the present disclosure provides a method for preparing a cathode material. The method includes the following steps.

S1: mixing a precursor and a lithium source, and optionally an M¹ source to obtain a raw material mixture.

In this step, there is no particular limitation on a specific method for mixing the precursor, the lithium source, and optionally M¹ source. For example, a mixer may be used for mixing. It should be understood that in this step, whether the M¹ source is added can be flexibly selected as needed.

In some embodiments, the lithium source includes one of lithium carbonate, lithium hydroxide, anhydrous lithium hydroxide, or lithium oxide. Therefore, the materials are widely available and have lower costs.

In some embodiments, the M¹ source includes at least one of oxides, carbonates, phosphates, fluorides, chlorides, hydroxides, and silicides, containing an M¹ element. Therefore, the materials are widely available and have lower costs.

S2: performing a first sintering on the raw material mixture. The first sintering includes heating the raw material mixture to a first temperature T1 and holding the temperature for a first period of time, cooling the mixture from T1 to 600°C at an average cooling rate of ≤2°C/min, and naturally cooling the mixture to a room temperature to obtain a primary sintered material.

The average cooling rate should be calculated by dividing a total temperature difference from T1 to 600°C by a total duration taken to cool from T1 to 600°C. In specific implementation, a continuous cooling method or a method of setting an intermediate temperature for isothermal holding may be used. During cooling, an instantaneous cooling rate in a certain period is allowed to be higher than 2°C/min, provided that the average cooling rate from T1 to 600°C is less than 2°C/min, which meets requirements of the present disclosure. The same applies to the average cooling rate described below.

In some embodiments, the first sintering includes: heating the raw material mixture to the first temperature T1 and holding the temperature for the first period of time, cooling the mixture from T1 to T1-80°C at an average cooling rate of ≤1°C/min, cooling the mixture from T1-80°C to 600°C at the average cooling rate of ≤2°C/min, and naturally cooling the mixture to the room temperature.

When T1-80°C>800°C, the mixture is cooled from T1-80°C to 800°C at an average cooling rate of ≤1.5°C/min, continuously cooled from T1-80°C to 600°C at the average cooling rate of ≤2°C/min, and naturally cooled to the room temperature.

When 600°C≤T1-80°C≤800°C, the mixture is cooled from T1-80°C to 600°C at the average cooling rate of ≤2°C/min, and naturally cooled to the room temperature.

When the cooling rate is within the above range, it can make the distribution of the metal element in the bulk phase of the multi-element cathode material more uniform, effectively mitigating issues such as lattice defects and intragranular segregation caused by an excessively rapid cooling rate, reducing concentration of internal microstrain, and enhancing the stability of the layered structure.

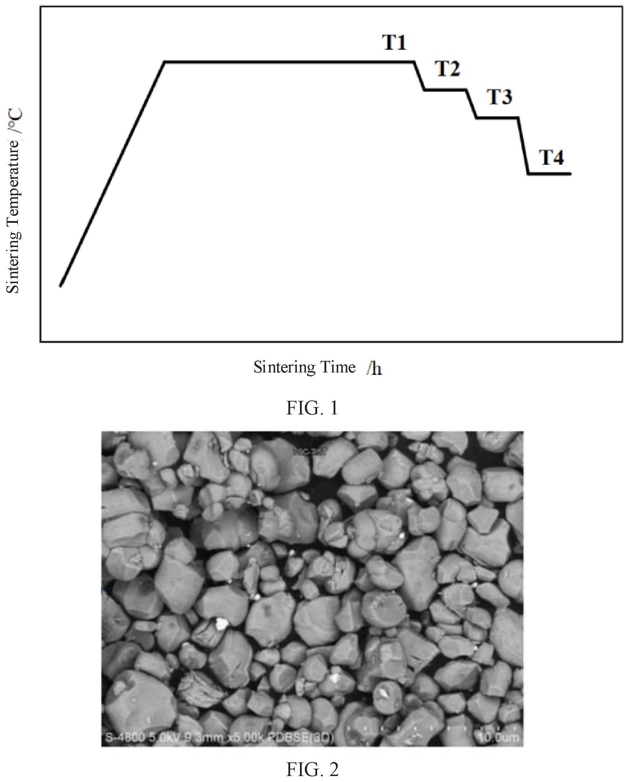

It should be noted that there is no particular limitation on a specific cooling procedure of the present disclosure, which can be divided into different stages. As an example, reference can be made to FIG. 1, the raw material mixture may be heated to the first temperature T1 and held at the temperature for the first period of time, cooled from T1 to T2 at an average cooling rate of v2, cooled from T2 to T3 at an average cooling rate of v3, and finally cooled from T3 to T4 at an average cooling rate of v4, and held at the temperature for a period of time to obtain the primary sintered material.

S3: mixing the primary sintered material with a first M² source, and performing a second sintering on the obtained mixture to obtain a secondary sintered material.

In this step, there is no particular limitation on a specific method for mixing the primary sintered material and the first M² source. For example, the mixer may be used for mixing.

In some embodiments, the method for preparing the cathode material further includes: mixing the secondary sintered material with a second M² source, and performing a third sintering on the obtained mixture to obtain a tertiary sintered material.

In some embodiments, each of the first M² source and a second M² source independently includes at least one of oxides, carbonates, phosphates, fluorides, chlorides, hydroxides, and silicides, containing an M² element. Therefore, the materials are widely available and have lower costs.

In some embodiments, a temperature of the second sintering ranges from 400°C to 800°C (e.g., 400°C, 500°C, 600°C, 700°C, or 800°C), with a holding duration ranging from 4 hours to 10 hours (e.g., 4h, 5h, 6h, 7h, 8h, 9h, or 10h).

In some embodiments, a temperature of the third sintering ranges from 300°C to 600°C (e.g., 300°C, 350°C, 400°C, 450°C, 500°C, 550°C, or 600°C) with a holding duration ranging from 4 hours to 10 hours (e.g., 4h, 5h, 6h, 7h, 8h, 9h, or 10h).

In the present disclosure, by controlling a temperature gradient of high-temperature solid-phase sintering and increasing a holding time above 600°C in the medium-high temperature range (i.e., reducing the cooling rate), the distribution of the metal element in the bulk phase of the cathode material is made more uniform, effectively mitigating issues such as lattice defects and intragranular segregation caused by the excessively rapid cooling rate, reducing the concentration of internal microstrain, and thus enhancing the stability of the layered structure. In this way, a cathode material with a low stress and high compressive strength can be prepared. This cathode material has better processability, produces fewer cracks on the particle surface after the electrode calendering, and significantly improves the cycling performance. In the preparation method, by controlling the cooling rate, and performing medium-to-high temperature holding and annealing at an end of high-temperature sintering, an internal stress in the cathode material is eliminated and the compressive strength of the cathode material is enhanced. Moreover, the process is simple and controllable, with low manufacturing cost, enabling large-scale production.

In a third aspect, the present disclosure provides a lithium-ion battery. The lithium-ion battery includes the cathode material according to the first aspect of the present disclosure or the cathode material prepared by the method according to the second aspect of the present disclosure. Therefore, the lithium-ion battery has good cycling performance.

It should be understood that there is no particular limitation on a specific type of the lithium-ion battery, which may be a primary battery or a secondary battery. The shape of the lithium-ion battery may be a cylindrical battery, a prismatic battery, or a battery in any other shape. When classified by outer packaging, the lithium-ion battery may be a hard-shell battery, or a soft-pack battery, etc.

Typically, the lithium-ion battery includes a positive electrode sheet, a negative electrode sheet, an electrolyte, and a separator. The positive electrode sheet, the negative electrode sheet, and the separator may be made into an electrode assembly through a winding process or a lamination process. The electrode assembly and the electrolyte may be contained in an outer packaging. During charging and discharging of the lithium-ion battery, active ions are intercalated and deintercalated between the positive electrode sheet and the negative electrode sheet. The electrolyte provides ion conduction between the positive electrode sheet and the negative electrode sheet. The separator is disposed between the positive electrode sheet and the negative electrode sheet, mainly to prevent a short circuit between a positive electrode and a negative electrode, while allowing the active ions to pass through.

In some embodiments, the positive electrode sheet may include a positive current collector and a positive active material layer disposed on at least one surface of the positive current collector. The positive active material layer includes a positive active material, a conductive agent, and a binder. The positive current collector may include a metal foil, for example, an aluminum foil. The positive active material may include the cathode material according to the first aspect of the present disclosure or the cathode material prepared by the method according to the second aspect of the present disclosure. The conductive agent may include acetylene black, a single-walled carbon nanotube, and other conventional materials in the field. The binder may be polyvinylidene fluoride (PVDF) and other conventional materials in the field.

In some embodiments, the negative electrode sheet may include a negative current collector and a negative active material layer disposed on at least one surface of the negative current collector. The negative active material layer may include a negative active material, a thickener, a conductive agent, and a binder. The negative current collector may use a metal foil, for example, a copper foil. The negative active material may include artificial graphite, natural graphite, silicon-containing carbon-based composites, lithium-containing metal composites, lithium metal materials, and other commonly used negative active materials in the field. The thickener may be sodium carboxymethyl cellulose (CMC-Na) and other conventional materials in the field. The conductive agent may be the acetylene black and other conventional materials in the field. The binder may be styrene-butadiene rubber and other conventional materials in the field.

In some embodiments, the separator may be a separator known in the art that can be used in the lithium-ion battery and is stable to the electrolyte used, such as a polyethylene separator, a polypropylene separator, or a polyethylene/polypropylene composite separator.

In a fourth aspect, the present disclosure provides an electrical device. The electrical device includes the lithium-ion battery according to the third aspect of the present disclosure. Therefore, the electrical device has a long service life.

In some embodiments, the lithium-ion battery can be used as a power source for the electrical device or as an energy storage unit for the electrical device. The electrical device may include a mobile device (such as a mobile phone and a laptop computer), an electric vehicle (such as a pure electric vehicle, a hybrid electric vehicle, a plug-in hybrid electric vehicle, an electric bicycle, an electric scooter, an electric golf cart, and an electric truck), an electric train, a ship and a satellite, an energy storage system, etc., but is not limited thereto.

The examples of the present disclosure are described in detail below.

### Example 1

(1) A multi-element material precursor Ni_{0.6}Co_{0.1}Mn_{0.3}(OH)₂ and lithium carbonate were mixed uniformly, subjected to high-temperature solid-phase sintering at 1000°C, and held at the temperature for 10 hours. It was then cooled to 920°C at a rate of 0.5°C/min, further cooled to 800°C at a rate of 1°C/min, and subsequently cooled to 600°C at a rate of 2°C/min. Then, it was naturally cooled to the room temperature, crushed, and sieved to obtain the primary sintered material.
(2) The primary sintered material was mixed uniformly with a coating agent Al₂O₃, subjected to heat treatment at 500°C, and held at the temperature for 8 hours. It was then crushed and sieved to obtain the single crystal multi-element cathode material.

### Example 2 to Example 23

The procedures were the same as those in Example 1, with specific differences shown in Table 1 and Table 2.

### Comparative Example 1

Comparative Example 1 was conducted by performing the high-temperature solid-phase sintering at 1000°C and holding the temperature for 10 hours as in Example 1, followed by direct natural cooling to the room temperature. All other conditions remained unchanged.

### Comparative Example 2

Comparative Example 2 was conducted by performing the high-temperature solid-phase sintering at 1000°C and holding the temperature for 10 hours as in Example 1, followed by cooling to 600°C at a rate of 4°C/min and naturally cooling to the room temperature. All other conditions remained unchanged.

Specific parameters of the above examples and comparative examples are shown in Table 1 and Table 2.

**Table 1 Chemical Composition of Cathode Materials**

| | Chemical Composition | Li a1 | Ni x1 | Co y1 | Mn z1 | M¹ m1 | M² m2 | M¹ | M² |
|---|---|---|---|---|---|---|---|---|---|
| Example 1 | Li_{1.01}(Ni_{0.6}Co_{0.1}Mn_{0.29})Al_{0.01}O₂ | 0.01 | 0.6 | 0.1 | 0.29 | / | 0.01 | / | Al |
| Example 2 | Li_{0.9}(Ni_{0.6}Co_{0.1}Mn_{0.29})Al_{0.01}O₂ | -0.1 | 0.6 | 0.1 | 0.29 | / | 0.01 | / | Al |
| Example 3 | Li_{1.1}(Ni_{0.6}Co_{0.1}Mn_{0.29})Al_{0.01}O₂ | 0.1 | 0.6 | 0.1 | 0.29 | / | 0.01 | / | Al |
| Example 4 | Li_{1.01}(Ni_{0.5}Co_{0.2}Mn_{0.29})Al_{0.01}O₂ | 0.01 | 0.5 | 0.2 | 0.29 | / | 0.01 | / | Al |
| Example 5 | Li_{1.01}(Ni_{0.7}Co_{0.1}Mn_{0.19})Al_{0.01}O₂ | 0.01 | 0.7 | 0.1 | 0.19 | / | 0.01 | / | Al |
| Example 6 | Li_{1.01}(Ni_{0.8}Co_{0.1}Mn_{0.09})Al_{0.01}O₂ | 0.01 | 0.8 | 0.1 | 0.09 | / | 0.01 | / | Al |
| Example 7 | Li_{1.01}(Ni_{0.9}Co_{0.05}Mn_{0.04})Al_{0.01}O₂ | 0.01 | 0.9 | 0.05 | 0.04 | / | 0.01 | / | Al |
| Example 8 | Li_{1.01}(Ni_{0.6}Co_{0.1}Mn_{0.24}Zr_{0.05})Al_{0.01}O₂ | 0.01 | 0.6 | 0.1 | 0.24 | 0.05 | 0.01 | Zr | Al |
| Example 9 | Li_{1.01}(Ni_{0.6}Co_{0.1}Mn_{0.19}Zr_{0.1})Al_{0.01}O₂ | 0.01 | 0.6 | 0.1 | 0.19 | 0.1 | 0.01 | Zr | Al |
| Example 10 | Li_{0.01}(Ni_{0.6}Co_{0.1}Mn_{0.3})O₂ | 0.01 | 0.6 | 0.1 | 0.3 | / | 0 | / | / |
| Example 11 | Li_{1.01}(Ni_{0.6}Co_{0.1}Mn_{0.28})Al_{0.01}O₂ | 0.01 | 0.6 | 0.1 | 0.28 | / | 0.02 | / | Al |
| Example 12 | Li_{1.01}(Ni_{0.6}Co_{0.1}Mn_{0.29})W_{0.01}O₂ | 0.01 | 0.6 | 0.1 | 0.29 | / | 0.01 | / | W |
| Example 13 | Li_{1.01}(Ni_{0.6}Co_{0.1}Mn_{0.29})Ti_{0.01}O₂ | 0.01 | 0.6 | 0.1 | 0.29 | / | 0.01 | / | Ti |
| Example 14 | Li_{1.01}(Ni_{0.6}Co_{0.1}Mn_{0.29})Co_{0.01}O₂ | 0.01 | 0.6 | 0.1 | 0.29 | / | 0.01 | / | Co |
| Example 15 | Li_{1.01}(Ni_{0.6}Co_{0.1}Mn_{0.29})Al_{0.01}O₂ | 0.01 | 0.6 | 0.1 | 0.29 | / | 0.01 | / | Al |
| Example 16 | Li_{1.01}(Ni_{0.6}Co_{0.1}Mn_{0.29})Al_{0.01}O₂ | 0.01 | 0.6 | 0.1 | 0.29 | / | 0.01 | / | Al |
| Example 17 | Li_{1.01}(Ni_{0.6}Co_{0.1}Mn_{0.29})Al_{0.005}F_{0.005}O₂ | 0.01 | 0.6 | 0.1 | 0.29 | / | 0.01 | / | Al,F |
| Example 18 | Li_{1.01}(Ni_{0.6}Co_{0.1}Mno.₂₉)Al_{0.005}Nb_{0.005}O ₂ | 0.01 | 0.6 | 0.1 | 0.29 | / | 0.01 | / | Al, Nb |
| Example 19 | Li_{1.01}(Ni_{0.6}Co_{0.1}Mn_{0.29})Al_{0.005}B_{0.005}O₂ | 0.01 | 0.6 | 0.1 | 0.29 | / | 0.01 | / | Al,B |
| Example 20 | Li_{1.01}(Ni_{0.6}Co_{0.1}Mn_{0.29})Al_{0.01}O₂ | 0.01 | 0.6 | 0.1 | 0.29 | / | 0.01 | / | Al |
| Example 21 | Li_{1.01}(Ni_{0.6}Co_{0.1}Mn_{0.29})Al_{0.01}O₂ | 0.01 | 0.6 | 0.1 | 0.29 | / | 0.01 | / | Al |
| Example 22 | Li_{1.01}(Ni_{0.6}Co_{0.1}Mn_{0.29})Al_{0.01}O₂ | 0.01 | 0.6 | 0.1 | 0.29 | / | 0.01 | / | Al |
| Example 23 | Li_{1.01}(Ni_{0.9}Co_{0.05}Mn_{0.04})Al_{0.01}O₂ | 0.01 | 0.9 | 0.05 | 0.04 | / | 0.01 | / | Al |
| Comparative Example 1 | Li_{1.01}(Ni_{0.6}Co_{0.1}Mn_{0.29})Al_{0.01}O₂ | 0.01 | 0.6 | 0.1 | 0.29 | / | 0.01 | / | Al |
| Comparative Example 2 | Li_{1.01}(Ni_{0.6}Co_{0.1}Mn_{0.29})Al_{0.01}O₂ | 0.01 | 0.6 | 0.1 | 0.29 | / | 0.01 | / | Al |

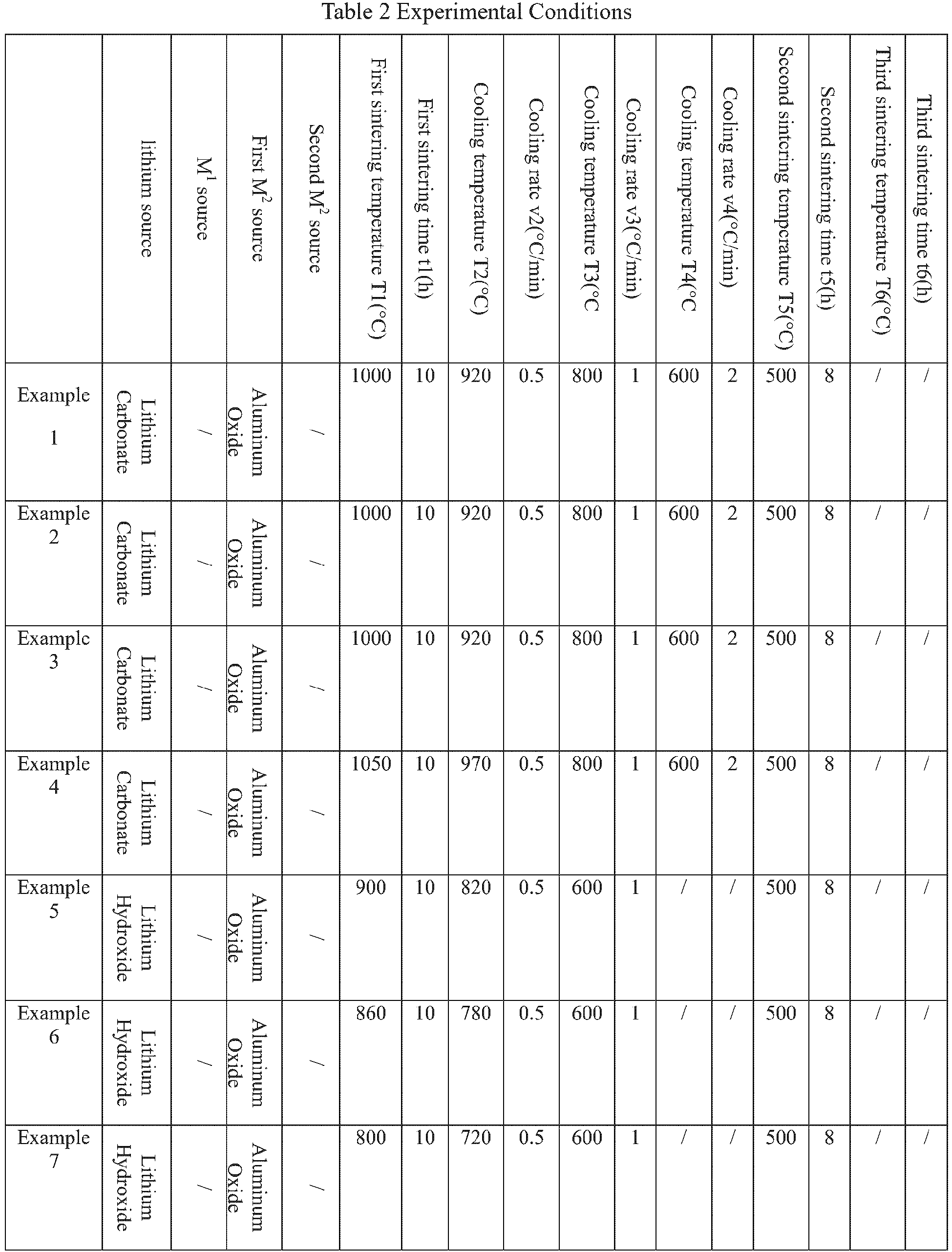

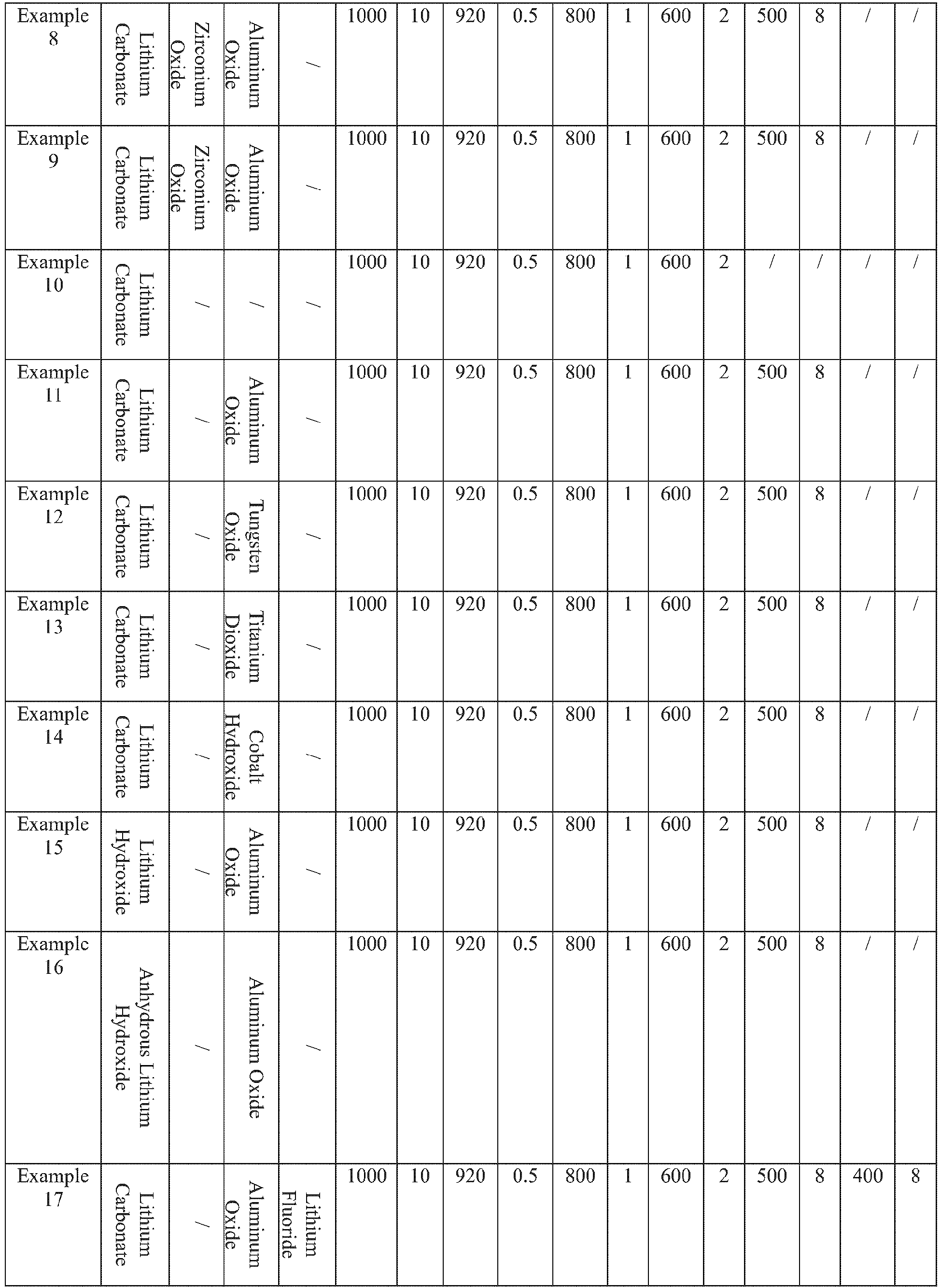

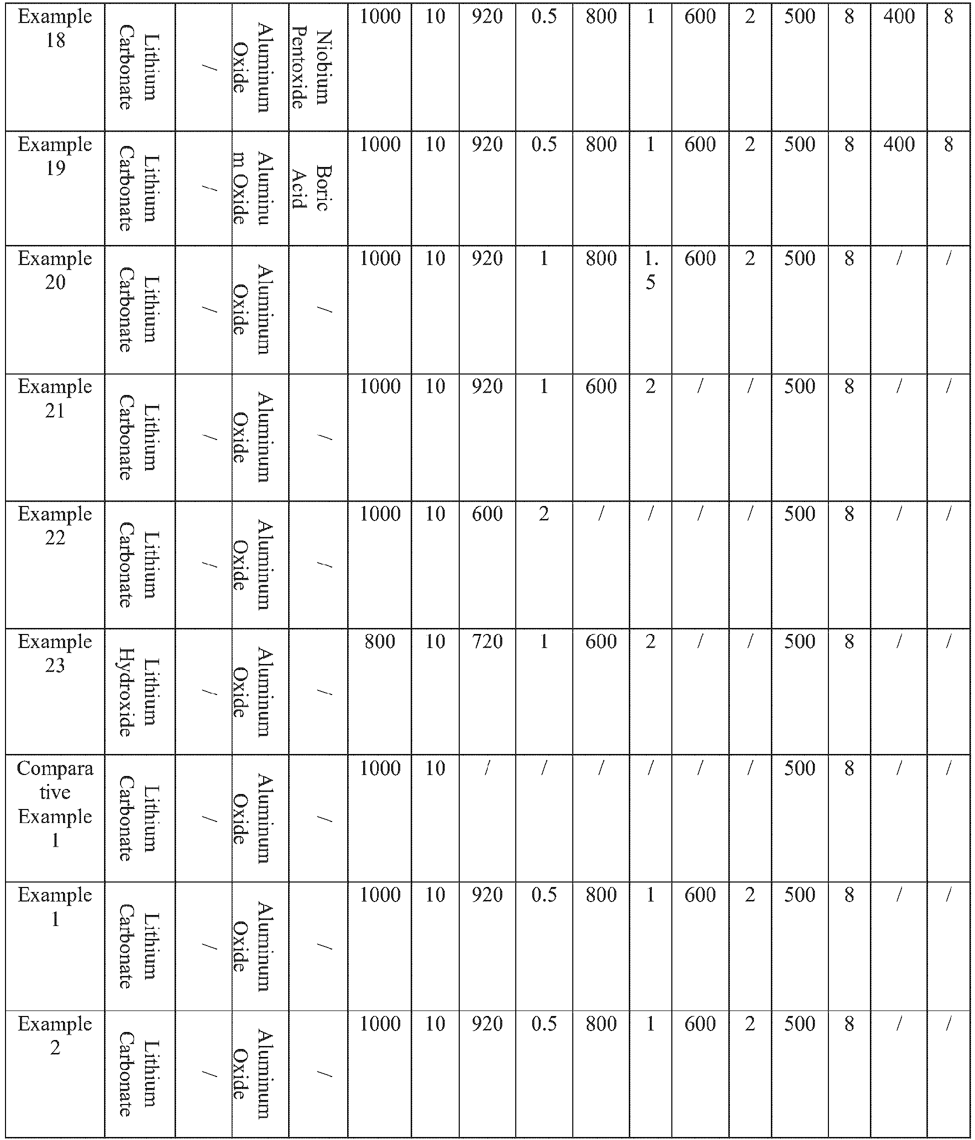

### Performance Tests:

1. Microstrain Test:
   Step 1: the single crystal multi-element cathode material was subjected to surface moisture treatment, and was usually dried in the blast oven or the vacuum oven at 100°C to 150°C for 1 hour to 2 hours.
   Step 2: the sample was weighed. The treated sample was weighed according to the following standards: for a sample with D₅₀≤3 µm, a sampling amount was 0.5 g to 1.5g; for a sample with 3 µm≤D₅₀≤7 µm, a sampling amount was 1.5 g to 3g; for a sample with D₅₀≥7 µm, a sampling amount was 3 g to 5g. The weighed sample was transferred to the compaction mold, and the mold was shaken gently to make the sample surface flat.
   Step 3: the mold with the sample inside was placed in the device, and was slowly pressurized to different pressure levels (specifically, a pressure of 50 MPa, 100 MPa, 200 MPa, 300 MPa, 400 MPa, and 500 MPa were applied). After standing for 30s, the mold was taken out, and the sample was demolded. One sample preparation can only be tested at a single pressure point.
   Step 4: the demolded cathode pressed sheet was put into the mortar. The pressed sheet was gently disaggregated, and standard sieves were used for particle sieving to make the pressed sheet completely pulverized without the flaky particle. The treated sample was packed into a bag, labeled, and stored. Specification of standard sieves: 200 meshes to 400 meshes.
   Step 5: the instrument parameter of the X-ray powder diffractometer was calibrated. Standard Si powder was used to calibrate the goniometer position of the device. Standard LaB₆ was used to calibrate the instrument width. The operation was as follows.

Test conditions: voltage 40 kv; current 200 mA; step size: 0.02°; scanning angle 5° to 120°; collection time 45 minutes; a collected peak intensity was required to be greater than 10000 cps. The goniometer position and the instrument width were calibrated, respectively, under the determined test conditions. Standard substances (Si powder, LaB₆) were mounted on the sample stage, the diffraction pattern was collected, the instrument was calibrated, and the data were saved.

Step 6: the materials subjected to different pressures were mounted on the sample stage, respectively, an X-ray powder diffraction test was performed under the determined conditions, and the data for subsequent analysis was saved. The samples mounted on the sample stage are required to be level, and a height of the sample needs to be consistent in each test.

Step 7: test data was imported into Rietveld refinement software for data processing: (1) first, peak position processing was performed by selecting a maximum peak for processing and ensuring that the software can identify all peak positions; (2) phase identification was performed by using PDF5+ database (International Centre for Diffraction Data) to determine the phase. The test data is required to be highly consistent with card information; (3) instrument width calibration data (an external standard calibrated width) was added, all crystal planes were selected for calculating the microstress data of the material using an Halder-Wagner method.
2. D₅₀ Test: a value of D₅₀ was obtained by testing with a Mastersize 2000 laser particle size analyzer from Malvern.
3. Particle Size Distribution Width (SPAN_{P0}) Test: a value of SPAN_{P0} was obtained by testing with the Mastersizer 2000 laser particle size analyzer from Malvern.
4. Specific Surface Area Test: the specific surface area was obtained by testing with a Tristar II 3020 specific surface area tester from Micromeritics (USA).
5. Cycling Performance Test:
   (1) Battery composition: 9.5 g of cathode active material sample, 0.25 g of acetylene black, and 0.25 g of polyvinylidene fluoride (PVDF) were mixed to form cathode slurry. The slurry was coated on the aluminum foil and dried, then pressed into a shape with a diameter of 12 mm and a thickness of 120 µm under a pressure of 100 MPa, and then dried in a vacuum drying oven at 120°C for 12 h to obtain the positive plate.

The negative plate was a Li metal sheet with a diameter of 17 mm and a thickness of 1 mm. The separator was a polyethylene porous membrane with a thickness of 25 µm. A 1.0 mol/L LiPF₆ solution was used as the electrolyte, in which an equal-volume mixture of ethylene carbonate (EC) and diethyl carbonate (DEC) was used as a solvent.

The positive plate, the separator, the negative plate, and the electrolyte were assembled into a 2025-type coin cell.

(2) Capacity retention rate after 80 cycles: a charge-discharge voltage range was controlled at 3.0 V to 4.45 V. At a constant temperature of 45°C, the coin cell was cycled 1 time at 0.1 C, and then cycled 80 times at 1 C to evaluate a high-temperature cycling capacity retention rate of the cathode material.

6. Morphology Test: the morphology was observed and obtained by testing with an S-4800 scanning electron microscope from HITACHI (Japan).

Performance parameters of a cathode active material prepared in the above examples and comparative examples are shown in Table 3.

**Table 3 Test Results**

| | k | Microstrain before compression , N_{P0}/% | Microstrain after compression at 500 MPa, N_{P500}/% | (D_{50(P0)}-D_{50(P500)})/D_{50 (P0)}/% | D_{50(P0)}/µm | SPAN_{P0} | (SP₅₀₀-SP₀)/SP₀/% | Specific surface area S_{P0}/ g/cm² | Retention rate after 80 cycles at 45°C /% |
|---|---|---|---|---|---|---|---|---|---|
| Example 1 | 0.0002 | 0.034 | 0.127 | 11 | 3.56 | 1.12 | 32 | 0.66 | 96.8 |
| Example 2 | 0.0003 | 0.037 | 0.143 | 13 | 3.45 | 1.23 | 37 | 0.7 | 96.3 |
| Example 3 | 0.0002 | 0.028 | 0.111 | 10 | 3.67 | 1.08 | 24 | 0.61 | 96.7 |
| Example 4 | 0.0001 | 0.034 | 0.109 | 8 | 4.23 | 0.97 | 31 | 0.52 | 97.6 |
| Example 5 | 0.0004 | 0.045 | 0.153 | 14 | 3.87 | 1.07 | 25 | 0.68 | 95.4 |
| Example 6 | 0.0004 | 0.037 | 0.133 | 13 | 3.32 | 1.15 | 35 | 0.73 | 94.6 |
| Example 7 | 0.0005 | 0.048 | 0.162 | 16 | 2.97 | 1.27 | 38 | 0.88 | 93.7 |
| Example 8 | 0.0002 | 0.026 | 0.121 | 15 | 3.58 | 1.13 | 24 | 0.62 | 96.9 |
| Example 9 | 0.0003 | 0.029 | 0.139 | 9 | 3.63 | 1.09 | 29 | 0.64 | 97.1 |
| Example 10 | 0.0004 | 0.038 | 0.146 | 15 | 3.66 | 1.15 | 39 | 0.65 | 95.6 |
| Example 11 | 0.0002 | 0.030 | 0.125 | 11 | 3.59 | 1.14 | 33 | 0.69 | 97.0 |
| Example 12 | 0.0003 | 0.035 | 0.144 | 14 | 3.53 | 1.16 | 42 | 0.62 | 95.7 |
| Example 13 | 0.0002 | 0.052 | 0.137 | 13 | 3.61 | 1.12 | 38 | 0.58 | 96.2 |
| Example 14 | 0.0002 | 0.044 | 0.123 | 13 | 3.67 | 1.08 | 34 | 0.57 | 96.9 |
| Example 15 | 0.0001 | 0.039 | 0.108 | 10 | 3.61 | 1.12 | 24 | 0.60 | 97.3 |
| Example 16 | 0.0003 | 0.059 | 0.116 | 12 | 3.55 | 1.11 | 29 | 0.59 | 97.1 |
| Example 17 | 0.0004 | 0.045 | 0.167 | 16 | 3.54 | 1.14 | 30 | 0.74 | 95.7 |
| Example 18 | 0.0003 | 0.037 | 0.148 | 15 | 3.59 | 1.09 | 34 | 0.83 | 96.3 |
| Example 19 | 0.0004 | 0.033 | 0.152 | 15 | 3.63 | 1.16 | 23 | 0.78 | 95.5 |
| Example 20 | 0.0004 | 0.045 | 0.137 | 16 | 3.63 | 1.12 | 43 | 0.63 | 95.1 |
| Example 21 | 0.0009 | 0.053 | 0.163 | 15 | 3.64 | 1.15 | 46 | 0.66 | 94.5 |
| Example 22 | 0.0011 | 0.069 | 0.175 | 18 | 3.59 | 1.13 | 57 | 0.65 | 93.8 |
| Example 23 | 0.0008 | 0.035 | 0.165 | 21 | 3.01 | 1.28 | 42 | 0.86 | 92.3 |
| Comparative Example 1 | 0.0034 | 0.083 | 0.197 | 27 | 3.61 | 1.22 | 78 | 0.53 | 90.3 |
| Comparative Example 2 | 0.0021 | 0.097 | 0.182 | 22 | 3.59 | 1.24 | 64 | 0.55 | 91.1 |

Based on the data in Table 3, a comparison between Example 1 to Example 23 and Comparative Example 1 to Comparative Example 2 reveals that, in the present disclosure, by controlling the temperature gradient of high-temperature solid-phase sintering and increasing the holding time above 600°C in the medium-high temperature range, the microstrain of the cathode material is effectively reduced, crack formation is minimized, and the cycling performance of the lithium-ion battery is significantly improved.

In the description of the present disclosure, it should be understood that, the terms such as "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "plurality" means at least two, such as two, three, unless otherwise specifically defined.

In the present disclosure, the description with reference to the terms "one embodiment," "some embodiments," "an example," "a specific example," or "some examples," etc., means that specific features, structures, materials, or characteristics described in conjunction with the embodiment(s) or example(s) are included in at least one embodiment or example of the present disclosure. In the present disclosure, schematic representations of the above terms do not necessarily direct to the same embodiment or example. Further, the particular features, structures, materials, or characteristics may be combined in any suitable manner in any one or more embodiments or examples. In addition, those skilled in the art can combine and integrate the different embodiments or examples in this specification, as well as the features of different embodiments or examples without mutual contradiction.

Although the embodiments of the present disclosure have been shown and described above, it should be understood that the above-mentioned embodiments are exemplary and should not be construed as limiting the present disclosure. Those skilled in the art can make changes, modifications, substitutions, and variations to the above-mentioned embodiments within the scope of the present disclosure.

## Claims

1. A cathode material, comprising:
Li₁₊ₐ₁(Niₓ₁Co_{y1}Mn_{z1}M¹ₘ₁)M²ₘ₂O₂,
where:
-0.1≤a1≤0.1, 0.5≤x1<1, 0<y1≤0.4, 0<z1≤0.6, 0≤m1≤0.1, 0≤m2≤0.02;
M¹ comprises at least one of Ta, Cr, Mo, W, La, Al, Y, Ti, Zr, V, Nb, Ce, Er, Mg, Sr, Ba, and B; and
M² comprises at least one of W, Mo, Zr, Al, V, Ti, B, Co, and Nb,
wherein a fitting line of a pressure Pₓ versus microstrain change ΔN_{Px} of the cathode material satisfies: ΔN_{Px}=kPₓ, and 0<k<0.0012, where:
k is a slope;
Pₓ is a pressure applied to the cathode material prior to microstrain testing, in the unit of MPa; and
the microstrain change ΔN_{Px} is a difference between a microstrain of the cathode material under an applied pressure Pₓ and a microstrain of the cathode material without an applied pressure.

2. The cathode material according to claim 1, wherein 0<k<0.001.

3. The cathode material according to claim 1, satisfying at least one of the following conditions:
a microstrain N_{P0} of the cathode material without an applied pressure is less than 0.1%; and
a microstrain N_{P500} of the cathode material under an applied pressure of 500 MPa is less than 0.18%.

4. The cathode material according to claim 3, satisfying at least one of the following conditions:
the microstrain N_{P0} of the cathode material without the applied pressure is less than 0.08%; and
the microstrain N_{P500} of the cathode material under the applied pressure of 500 MPa is less than 0.16%.

5. The cathode material according to claim 1, wherein a D₅₀ particle size D_{50(P0)} of the cathode material without an applied pressure and a D₅₀ particle size D_{50(P500)} of the cathode material under an applied pressure of 500 MPa satisfy: (D_{50(P0)}-D_{50(P500)})/D_{50(P0)}<30%.

6. The cathode material according to claim 5, wherein the D₅₀ particle size D_{50(P0)} of the cathode material without the applied pressure and the D₅₀ particle size D_{50(P500)} of the cathode material under the applied pressure of 500 MPa satisfy: (D_{50(P0)}-D_{50(P500)})/D_{50(P0)}<20%.

7. The cathode material according to claim 1, wherein a D₅₀ particle size D_{50(P0)} of the cathode material without an applied pressure ranges from 2 µm to 6 µm.

8. The cathode material according to claim 7, wherein the D₅₀ particle size D_{50(P0)} of the cathode material without the applied pressure ranges from 2.5 µm to 4.5 µm.

9. The cathode material according to claim 1, wherein a particle size distribution span SPAN_{P0} of the cathode material without an applied pressure satisfies: 0.8<SPAN_{P0}<1.4, wherein SPAN_{P0}=(D_{90(P0)}-D_{10(P0)})/D_{50(P0)}, D_{10(P0)} being a D₁₀ particle size of the cathode material without the applied pressure, D_{50(P0)} being a D₅₀ particle size of the cathode material without the applied pressure, and D_{90(P0)} being a D₉₀ particle size of the cathode material without the applied pressure.

10. The cathode material according to claim 9, wherein the particle size distribution span SPAN_{P0} of the cathode material without the applied pressure satisfies: 0.9<SPAN_{P0}<1.3.

11. The cathode material according to claim 1, wherein a specific surface area of the cathode material without an applied pressure is denoted as S_{P0}, a specific surface area of the cathode material under an applied pressure of 500 MPa is denoted as S_{P500}, S_{P0} and S_{P500} satisfying: (S_{P500}-S_{P0})/S_{P0}<75%.

12. The cathode material according to claim 11, wherein the specific surface area of the cathode material without the applied pressure is denoted as S_{P0}, the specific surface area of the cathode material under the applied pressure of 500 MPa is denoted as S_{P500}, S_{P0} and S_{P500} satisfying: (S_{P500}-S_{P0})/S_{P0}<50%.

13. The cathode material according to claim 1, wherein a specific surface area of the cathode material without an applied pressure is denoted as S_{P0}, S_{P0} ranging from 0.3 m²/g to 1.2 m²/g.

14. The cathode material according to claim 13, wherein the specific surface area of the cathode material without the applied pressure is denoted as S_{P0}, S_{P0} ranging from 0.4 m²/g to 1.0 m²/g.

15. A method for preparing the cathode material according to any one of claims 1 to 14, the method comprising:
mixing a precursor and a lithium source, and optionally an M¹ source to obtain a raw material mixture;
performing a first sintering on the raw material mixture, wherein the first sintering comprises: heating the raw material mixture to a first temperature T1 and holding the temperature for a first period of time, cooling the mixture from T1 to 600°C at an average cooling rate of ≤2°C/min, and naturally cooling the mixture to a room temperature to obtain a primary sintered material; and
mixing the primary sintered material with a first M² source, and performing a second sintering on the obtained mixture to obtain a secondary sintered material.

16. The method according to claim 15, wherein the first sintering comprises:
heating the raw material mixture to the first temperature T1 and holding the temperature for the first period of time, cooling the mixture from T1 to T1-80°C at an average cooling rate of ≤1°C/min, cooling the mixture from T1-80°C to 600°C at the average cooling rate of ≤2°C/min, and naturally cooling the mixture to the room temperature.

17. The method according to claim 16, wherein the first sintering comprises:
heating the raw material mixture to the first temperature T1 and holding the temperature for the first period of time, cooling the mixture from T1 to T1-80°C at the average cooling rate of ≤1°C/min, and performing any one of:
when T1-80°C>800°C, cooling the mixture from T1-80°C to 800°C at an average cooling rate of ≤1.5°C/min, further cooling the mixture from T1-80°C to 600°C at the average cooling rate of ≤2°C/min, and naturally cooling the mixture to the room temperature; and
when 600°C≤T1-80°C≤800°C, cooling the mixture from T1-80°C to 600°C at the average cooling rate of ≤2°C/min, and naturally cooling the mixture to the room temperature.

18. The method according to claim 15, further comprising:
mixing the secondary sintered material with a second M² source, and performing a third sintering on the obtained mixture to obtain a tertiary sintered material.

19. The method according to claim 15, wherein:
the lithium source comprises one of lithium carbonate, lithium hydroxide, anhydrous lithium hydroxide, and lithium oxide;
the M¹ source comprises at least one of oxides, carbonates, phosphates, fluorides, chlorides, hydroxides, and silicides, containing an M¹ element; and
each of the first M² source and a second M² source independently comprises at least one of oxides, carbonates, phosphates, fluorides, chlorides, hydroxides, and silicides, containing an M² element.

20. The method according to claim 18, wherein a temperature of the second sintering ranges from 400°C to 800°C, with a holding duration ranging from 4 hours to 10 hours; and
a temperature of the third sintering ranges from 300°C to 600°C, with a holding duration ranging from 4 hours to 10 hours.

21. A lithium-ion battery, comprising:
the cathode material according to any one of claims 1 to 14; or
the cathode material prepared by the method according to any one of claims 15 to 20.

22. An electrical device, comprising the lithium-ion battery according to claim 21.
